# EUROPÄISCHE PATENTANMELDUNG

(11) **EP 4 622 306 A1**
(43) Veröffentlichungstag der Anmeldung: **24.09.2025**
(21) Anmeldenummer: 24215381.5
(22) Anmeldetag: 26.11.2024
(51) Int. Cl.: H04W 4/02, H04W 4/40, H04W 74/00, H04W 74/04, H04W 84/18, G01S 5/02, G01S 13/02, G01S 13/76, H04W 74/06

(54) **VERFAHREN ZUM BETREIBEN EINES UWB-NETZWERKS SOWIE EINRICHTUNG, AUFWEISEND EIN UWB-NETZWERK**

(30) Priorität: 22.03.2024 DE 102024108326
(71) Anmelder: HUF Hülsbeck & Fürst GmbH & Co. KG, 42551 Velbert (DE)
(72) Erfinder: HEINEMANN, Ferdinand, 40822 Mettmann (DE); PAPENFUß, Ulf, 45133 Essen (DE); KATHANI, Chinmay, 42553 Velbert (DE); MASCHLANKA, Matthias, 46485 Wesel (DE); GORNIK, Christian, 45549 Sprockhövel (DE); BREER, Jan, 45259 Essen (DE)
(74) Vertreter: Zenz Patentanwälte Partnerschaft mbB

(57) **Zusammenfassung**

Die Erfindung betrifft ein Verfahren zum Betreiben eines UWB-Netzwerks (2), beispielsweise in einem Fahrzeug (1).

Das UWB-Netzwerk (2) weist UWB-Mehrfunktionschips (3a, 3b, 3c, 3d, 3e, 3f, 3g) auf, die mit einem UWB-Gerät (6) mit einer Kommunikationsschnittstelle (5) eines Bedieners (7) UWB-Ranging durchführen können. Außerdem sind sie für UWB-Radaroperationen ausgebildet.

Die Kommunikation wird über eine Ablauffolge zeitlich gesteuert, die beispielsweise von einer Steuereinrichtung (4) ausgehandelt wird.

Die Erfindung betrifft ferner eine Einrichtung, die beispielsweise als Fahrzeug (1) ausgebildet sein kann.

## Beschreibung

Die Erfindung betrifft ein Verfahren zum Betreiben eines UWB-Netzwerks. Die Erfindung betrifft ferner eine Einrichtung, die ein UWB-Netzwerk aufweist.

In vielen Bereichen haben sich Zutritts- oder Authentifizierungssysteme etabliert, die als eine Information zur Plausibilisierung der Authentifizierung einen Abstand bestimmen, beispielsweise einen Abstand zwischen einem Fahrzeug und einem zur Authentifizierung genutzten Smartphone eines Bedieners. Auch die Bestimmung des Abstands ausgehend von mehreren Positionen, beispielsweise mehreren Positionen an einem Fahrzeug, zur anschließenden Bestimmung einer Position, beispielsweise mittels Trilateration oder N-Lateration mehrerer Laufzeiten, hat an Bedeutung gewonnen.

Bei der Bestimmung von Abständen hat in der jüngeren Vergangen die Anwendung von *Ultra-Wide-Band-Kommunikation,* kurz: UWB, an Bedeutung gewonnen.

Prinzipiell ist die Verwendung von Ultra-Wide-Band-Funksignalen, kurz: UWB-Funksignalen, für verschiedene Anwendungen aus der Praxis bekannt. Für die Benutzung in Produkten für den Endanwender stehen jedoch erst seit relativ kurzer Zeit kommerziell verfügbare UWB-Funkanordnungen zur Verfügung, die beispielsweise als UWB-Transceiver ausgebildet sind. Während die Grundlagen der Ultrabreitbandtechnologie und das Funktionsprinzip bereits seit langem bekannt sind, ist erst in jüngerer Vergangenheit die Benutzung außerhalb von Spezialanwendungen in großem Umfang zugänglich geworden, nicht zuletzt aufgrund liberalerer Regulierung.

Informationen zu UWB-Anwendungen sind beispielsweise dem IEEE Standard for Low-Rate Wireless Networks, 802.15.4-2020, July 2020; oder IEEE 802.15-4z-2020 - IEEE Standard for Low-Rate Wireless Networks, Amendment 1: Enhanced Ultra Wideband (UWB) Physical Layers (PHYs) and Associated Ranging Techniques, June 2020 zu entnehmen.

Die Ultrabreitbandtechnologie ist eine Nahbereichsfunkkommunikation, die auf dem Aussenden kurzer Signalpulse basiert. Die Signalpulse decken innerhalb einer großen Frequenzbandbreite eine Vielzahl von Frequenzen ab. Die Breite der abgedeckten Frequenzbereiche ist insbesondere von regulatorischen Vorgaben eines entsprechenden territorialen Gebiets abhängig. Die Informationsübertragung beruht bei UWB, anders als bei den meisten gängigen Funkkommunikationsverfahren, nicht auf einer Trägerfrequenzmodulation, sondern auf anderen Methoden der Modulation, wie beispielsweise On-Off-Keying, Pulsamplitudenmodulation oder Pulspositionsmodulation.

Die UWB-Kommunikation weist den prinzipiellen Vorteil auf, dass aufgrund der Aussendung von Pulsen eine Entfernungsbestimmung mittels eines laufzeitbasierten Ansatzes möglich ist. Aufgrund derartiger Ansätze wird oft auch auf die Bezeichnung der Time-Of-Flight-Methoden Bezug genommen. Beispielsweise kann die Entfernung zwischen einer UWB-Antenne einer Einrichtung, beispielsweise eines Kraftfahrzeugs, und einem für UWB-Kommunikation vorbereitetem portablen Gerät, beispielsweise einem mobilen UWB-Gerät, insbesondere einer Reihe von zum Anmeldetag verfügbaren Smartphones, mit vergleichsweiser hoher Genauigkeit ermittelt werden. Dies kann beispielsweise erreicht werden, indem ein UWB-Signal von der UWB-Antenne zu dem UWB-Gerät gesendet wird, ein UWB-Transceiver des portablen UWB-Geräts dieses beantwortet, und eine mit der UWB-Antenne der UWB-Funkanordnungen an der Einrichtung gekoppelte zentrale Steuereinheit das erfasste Antwortsignal auswertet. Erfahrungsgemäß kann bei guten Bedingungen eine Genauigkeit der Entfernungsbestimmung in der Größenordnung von wenigen Zentimetern erreicht werden. Die beschriebene Vorgehensweise der Kommunikation auf UWB-Basis und einer Entfernungsermittlung auf Basis von Time-Of-Flight-Berechnung ist als bereits in UWB-Funkanordnungen implementierte Eigenschaft verfügbar und dort als UWB-Ranging-Funktionalität referenziert.

In der Praxis wird beobachtet, dass Einrichtungen, beispielsweise Fahrzeuge, die UWB-Ranging-Funktionalität nutzen, in der Regel eine Mehrzahl von UWB-Transceivern aufweisen, die jeweils voneinander beabstandet an der Einrichtung positioniert sind.

Um für mehrere oder alle der UWB-Transceiver Ranging-Daten zu gewinnen, müssen diese mit dem UWB-Gerät, insbesondere einem portablen UWB-Gerät wie beispielsweise einem Smartphone, entsprechende Ranging-Kommunikation durchführen. Da das UWB-Gerät eine Kommunikation immer nur mit einem Kommunikationspartner durchführen kann, ist erforderlich, die Ranging-Kommunikation der Mehrzahl von UWB-Transceivern zu koordinieren. Für die Koordination von UWB-Ranging-Kommunikation wurde in der Praxis die Lösung gefunden, zwischen den beteiligten UWB-Transceivern des UWB-Netzwerks eine Ablauffolge zu verabreden, die bevorzugt zwischen den beteiligten UWB-Transceivern und dem UWB-Gerät als Kommunikationspartner synchronisiert ist. Die Synchronisierung hat auf Seiten des UWB-Geräts unter anderem den Vorteil, dass der energieintensive UWB-Empfang zeitlich begrenzt wird. Diese Ablauffolge umfasst eine Vorgabe der zeitlichen Reihenfolge der Ranging-Kommunikation für die beteiligten UWB-Transceiver, sowie außerdem noch die Reservierung von Zeit-Slots für die Übermittlung von Daten, die beispielsweise als PrePoll, Poll, Final, und/oder Final-Data bezeichnet werden können. Die Ablauffolge umfasst also Ranging-Slots und Daten-Slots, wobei die Ranging-Slots innerhalb der zeitlichen Ablauffolge die Zuordnung des zu einem bestimmten Zeitraum der Ablauffolge für die Kommunikation mit dem UWB-Gerät vorgesehenen UWB-Transceivers darstellen. Die Ablauffolge wird als Ranging-Durchgang, englisch: *ranging round,* bezeichnet und ist für eine mehrmalige Wiederholung bis zum vollständigen Ausfüllen eines sogenannten Ranging Blocks vorgesehen. Für das Verhältnis von Ranging Round zu Ranging Block können bestimmte Vorgaben bestehen, beispielsweise die Vorgabe, dass ein Ranging Block 96 Millisekunden lang andauert, und sich aus einer ganzzahligen Anzahl von Ranging Rounds zusammensetzt, die sich wiederum aus einer ganzzahligen Anzahl von Slots, Ranging-Slots und Daten-Slots, zusammensetzen. Die einzelnen Ranging-Slots können sodann den UWB-Transceivern zugeordnet werden, wodurch die Reihenfolge und zeitliche Abfolge der einzelnen UWB-Ranging-Kommunikationsvorgänge in einem Netzwerk von UWB-Transceivern festgelegt wird. Das Koordinieren des UWB-Rangings in sogenannten Ranging Rounds ist aus der Praxis bekannt, wie beispielsweise anhand der WO 2022/178399 A1 ersichtlich.

Aufgrund seiner Eigenschaften eignet sich UWB auch zur Nutzung von Radaranwendungen. Dabei werden UWB-Funksignale emittiert und nach Auftreffen auf ein Objekt von diesem als UWB-Radarantwort reflektiert. Die UWB-Radarantwort kann sodann ausgewertet werden. Für die Auswertung können grundsätzlich zwei Auswerteprinzipien genutzt werden, nämlich zum einen die Auswertung des zwischen Senden des UWB-Funksignals und Erhalt der UWB-Radarantwort vergangenen Zeitraums und zum anderen der Dopplereffekt. Die Nutzung von UWB-Radar hat beispielsweise den Vorteil, dass keine Kommunikation mit einem Kommunikationspartner erforderlich ist, da das Funktionsprinzip auf der Reflexion von Funkwellen basiert. Ein weiterer Vorteil ist die Möglichkeit, durch Nutzung des Dopplereffekts auf Geschwindigkeiten rückschließen zu können. Dieser Vorteil wurde in Anwendungen genutzt, um die Anwesenheit von Lebewesen in einem Fahrzeug zu detektieren. Auf UWB-Radar wird in der Praxis manchmal auch unter dem Begriff des UWB Sensings Bezug genommen.

Am Anmeldetag werden UWB-Chips kommerziell angeboten, die sowohl eine UWB-Ranging-Funktionalität als auch eine UWB-Radar-Funktionalität aufweisen. Derartige UWB-Chips nutzen den Vorteil, dass für beide Funktionalitäten derselbe Funk-Sendeempfänger, englisch: *radio transceiver,* und dieselbe Antenne genutzt werden können, wodurch der Raumbedarf und die Kosten des UWB-Chips vergleichsweise gering gehalten werden. Auf einen UWB-Chip, der die beiden Funktionalitäten der UWB-Ranging-Funktionalität und der UWB-Radar-Funktionalität vereint, wird im Folgenden als UWB-Mehrfunktionschip Bezug genommen.

Es ist zu erwarten, dass Einrichtungen, beispielsweise Fahrzeuge, für die das Zusammenspiel aus UWB-Ranging-Funktionalität und UWB-Radar-Funktionalität relevant ist, in der Regel eine Mehrzahl von UWB-Mehrfunktionschips aufweisen, die jeweils voneinander beabstandet an der Einrichtung positioniert sind.

Aus der oben beschriebenen Konstruktion des UWB-Mehrfunktionschips, insbesondere dem Umstand der Nutzung eines selben Funk-Sendeempfängers und derselben Antenne ergibt sich die Anforderung, dass der Zeitpunkt des Aussendens von Radarsignalen koordiniert erfolgen muss.

Die Bereitstellung einer derartigen Koordination ist die Aufgabe, welche der vorliegenden Entwicklung zugrunde lag.

Die Aufgabe wird gelöst mit einem Verfahren mit den Merkmalen des Anspruchs 1. Die Aufgabe wird ferner gelöst mit einer Einrichtung mit den Merkmalen des Anspruchs 16.

Es ist ein Verfahren zum Betreiben eines UWB-Netzwerks vorgesehen.

Das UWB-Netzwerk weist eine Anzahl von wenigstens zwei UWB-Mehrfunktionschips auf, die voneinander beabstandet an einer Einrichtung angeordnet sind. Die UWB-Mehrfunktionschips sind miteinander gekoppelt, beispielsweise ist eine insbesondere sternförmige kabelgebundene Kopplung mit einer zentralen Steuereinrichtung der Einrichtung möglich, die beispielsweise für die Ansteuerung der UWB-Mehrfunktionschips für die UWB-Ranging-Kommunikation und für das Ausführen der Radaroperation zuständig sein kann.

Wenigstens einer, bevorzugt jeder, Jeder der wenigstens zwei voneinander beabstandeten UWB-Mehrfunktionschips weist sowohl eine UWB-Ranging-Funktionalität als auch eine UWB-Radar-Funktionalität auf. Dabei kann es sich insbesondere um kommerziell angebotene UWB-Chips handeln, die von Haus aus sowohl für UWB-Ranging-Funktionalität als auch für UWB-Radar-Funktionalität eingerichtet sind und dabei jeweils für beide Funktionalitäten denselben UWB-Sendeempfänger und dieselbe Antenne nutzen.

Das Betreiben des UWB-Netzwerks umfasst, dass eine bidirektionale UWB-Ranging-Kommunikation eines jeden der wenigstens zwei voneinander beabstandeten UWB-Mehrfunktionschips mit einem für die UWB-Kommunikation vorbereiteten UWB-Gerät durchgeführt wird. Darüber hinaus umfasst das Betreiben des UWB-Netzwerks, dass aus dem UWB-Netzwerk heraus eine UWB-Radaroperation durchgeführt wird, dass also mindestens einer der UWB-Mehrfunktionschips des UWB-Netzwerks zusätzlich zu der UWB-Ranging-Kommunikation unter Verwendung der Radarfunktionalität eine Radaroperation durchführt, also ein Radarsignal aussendet und die Radarantwort für eine nachfolgende Auswertung empfängt. Die Radarantwort kann sodann, beispielsweise von einem zentralen Steuergerät der Einrichtung, mit dem die UWB-Mehrfunktionschips gekoppelt sind, ausgewertet werden; ebenso wie die Lokalisation des UWB-Geräts aus den UWB- Ranging-Kommunikationen.

Es erfolgt eine Koordinierung der Abfolge der jeweiligen UWB-Ranging-Kommunikationen der wenigstens zwei voneinander beabstandeten UWB-Mehrfunktionschips mit dem UWB-Gerät und der UWB-Radaroperation. Diese Koordinierung erfolgt auf Basis einer zuvor vereinbarten zeitlichen Ablauffolge, die zwischen dem UWB-Netzwerk und dem UWB-Gerät bekannt ist, und die als Ranging Block organisiert ist. Die zeitliche Dauer eines Ranging Blocks kann beispielsweise 96 ms oder ein Mehrfaches von 96 ms betragen, wobei ms die Abkürzung für "Millisekunden" ist.

Innerhalb des Ranging Blocks wird ein Ranging-Durchgang, auch als Ranging Round bezeichnet, einmal oder mehrfach absolviert.

Der Ranging-Durchgang ist in eine Anzahl von Slots unterteilt, nämlich Ranging-Slots und Daten-Slots. PrePoll und FinalData sind "Datenslots". Im PrePoll werden beispielsweise Parameter vom mobilen UWB-Gerät, ID-Device(Fob oder Smartphone), übertragen die für das Ranging wichtig sind, beispielsweise Session-ID und/oder Indizes für die Kryptographie. Mit FinalData überträgt das UWB-Gerät, ID-Device (Fob oder Smartphone) insbesondere Daten, beispielsweise alle empfangenen Zeitstempel, Timestamps, der jeweiligen UWB-Mehrfunktionschips, also Fahrzeugsatelliten, zurück an das Fahrzeug, damit Two-Way-Ranging Berechnung erfolgen kann.

Jedem der wenigstens zwei UWB-Mehrfunktionschips ist jeweils wenigstens ein Ranging-Slot als UWB-Ranging-Slot exklusiv zugeordnet. Das bedeutet, dass für jeden der UWB-Mehrfunktionschips in der Ablauffolge ein Ranging-Slot reserviert ist, während welchem der jeweilige UWB-Mehrfunktionschip eine vollständige Ranging-Kommunikation, also Senden eines UWB-Ranging-Signals und Empfangen der UWB-Ranging-Antwort, mit dem UWB-Gerät durchführt.

Durch diese Vorgehensweise ist gewährleistet, dass am Ende eines Ranging-Durchgangs für jeden UWB-Mehrfunktionschip eine Laufzeit-Information zur Verfügung steht, die sodann, beispielsweise im zentralen Steuergerät, zur Abstandsermittlung oder Positionsermittlung mittels - je nach Anzahl der vorhandenen UWB-Mehrfunktionschips - Bilateration, Trilateration, N-Lateration, genutzt werden kann.

Darüber hinaus ist vorgesehen, dass wenigstens einer der wenigstens zwei UWB-Mehrfunktionschips in einem ihm nicht als UWB-Ranging-Slot zugeordneten Ranging-Slot eine UWB-Radaroperation ausführt. Das bedeutet, dass innerhalb des einem UWB-Mehrfunktionschip nicht als UWB-Ranging-Slot zugeordneten Ranging-Slots dieser besagte UWB-Mehrfunktionschip ein Radarsignal aussendet und die Radarantwort empfängt. Dieses Vorgehen hat den Vorteil, dass am Ende eines Ranging-Durchgangs eine Radarinformation vorliegt, die unabhängig von einer bidirektionalen UWB-Kommunikation ist, und die eine zusätzliche Information liefert, beispielsweise über das Vorhandensein eines menschlichen Körpers oder einer menschlichen Gliedmaße im Radarerfassungsbereich des UWB-Mehrfunktionschips, der die Radaroperation durchführt. Die Radarantworten, die im Laufe der Ranging Round um im Laufe des Ranging Blocks erhalten werden, können sodann, beispielsweise im zentralen Steuergerät einer Einrichtung wie beispielsweise einem Fahrzeug, die das UWB-Netzwerk aufweist, ausgewertet werden

Die Idee, für die Radaroperation eigene Slots zuzuordnen, hat in besonders vorteilhafter Weise den Effekt, dass auch bei vielmaliger Wiederholung der Ranging Round, und unabhängig davon, ob nun die Radaroperation ausgeführt wird oder nicht, die Länge der Ranging Round und des Ranging Blocks konstant bleibt, sodass die Synchronisation zwischen den Geräten gut erhalten bleiben kann.

Bevorzugt ist vorgesehen, dass jedem der wenigstens zwei UWB-Mehrfunktionschips genau ein Ranging-Slot als UWB-Ranging-Slot exklusiv zugeordnet ist. Dadurch wird erreicht, dass zum einen für jeden der vorhandenen UWB-Mehrfunktionschips Abstandsdaten vorhanden sind und zum anderen die benötigte Gesamtzeitdauer für einen Ranging-Durchlauf minimiert ist.

Gemäß einer vorteilhaften Weiterbildung ist vorgesehen, dass der Ranging-Durchgang zusätzlich zu den jedem der wenigstens zwei UWB-Mehrfunktionschips exklusiv zugeordneten UWB-Ranging-Slots wenigstens einen freigehaltenen Ranging-Slot aufweist, der nicht einem UWB-Mehrfunktionschip als UWB-Ranging-Slot zugeordnet ist. Das bedeutet, dass der Aufbau der Ablauffolge in Ergänzung zu den bereits erläuterten Zuordnungen von Ranging-Slots zu UWB-Mehrfunktionschips für die UWB-Ranging-Kommunikation vorsieht, dass wenigstens ein Ranging-Slot vorgesehen ist, der innerhalb der Ranging-Round-Ablauffolge einen vorgegebenen Zeitraum reserviert, während welchem infolge des Freihaltens dieses Ranging-Slots keine UWB-Ranging-Kommunikation erfolgt, und in dem auch sonst keine Übermittlung beispielsweise von Daten vorgesehen ist. Der freigehaltene Ranging-Slot ist stattdessen bereits bei der Konzeption, beziehungsweise insbesondere beim Aushandeln des Ranging-Durchgangs mit einem Kommunikationspartner wie einem UWB-Gerät, beispielsweise einem Smartphone, als Platzhalter reserviert, um Radaroperationen durchzuführen. Es wird also die bekannte Möglichkeit, Ranging-Slots zu vergeben, genutzt, um einen Zeitraum zu reservieren, der dann aber explizit nicht zum Ranging verwendet wird. Dadurch steht er für die Radaroperation zur Verfügung mit dem Vorteil, dass keine nachteilige Wechselwirkung der Radaroperation mit einem vorhergehenden oder nachfolgenden UWB-Ranging zu erwarten ist. Insbesondere kann vorgesehen sein, dass während des freigehaltenen Ranging-Slots einer der UWB-Mehrfunktionschips oder mehrere der UWB-Mehrfunktionschips oder alle der UWB-Mehrfunktionschips eine Radaroperation durchführen. Durch das Reservieren des freigehaltenen Ranging-Slots ergibt sich der Vorteil, dass etwaige Störungen der UWB-Ranging-Kommunikation durch die Radarsignale vermieden werden. Ferner ergibt sich der Vorteil, dass - sofern gewünscht - alle UWB-Mehrfunktionschips eine Radaroperation durchführen können, da keiner der UWB-Mehrfunktionschips zum Zeitpunkt des freigehaltenen Ranging-Slots eine UWB-Ranging-Kommunikation durchführt. Die Folge ist eine verbesserte Datendichte und Datenqualität der erhaltenen Radarantworten.

In einer besonders bevorzugten Weiterbildung weist der Ranging-Durchgang wenigstens zwei freigehaltene Ranging-Slots auf, die nicht einem UWB-Mehrfunktionschip als UWB-Ranging-Slot zugeordnet sind. Durch das Bereitstellen von mehr als einem freigehaltenen Ranging-Slot wird in besonders vorteilhafter Weise bewirkt, dass die Anzahl von nicht mit UWB-Ranging-Kommunikation belegten Slots pro Zeiteinheit steigt. Dadurch wird eine höhere Flexibilität in der Durchführung von Radaroperationen geschaffen.

Besonders bevorzugt ist eine Weiterbildung, gemäß welcher der wenigstens eine der wenigstens zwei UWB-Mehrfunktionschips, der die UWB-Radaroperation ausführt, die UWB-Radaroperation in wenigstens einem freigehaltenen Ranging-Slot, bevorzugt wiederholt in jedem freigehaltenen Ranging-Slot, ausführt. Insbesondere dann, wenn in jedem freigehaltenen Ranging-Slot eine Radaroperation durchgeführt wird, erhöht dies die zeitliche Auflösung von Radardaten. Dadurch wird ermöglicht, eine verbesserte Radarerkennung zu erhalten, was beispielsweise in Anwendungen wie der Gestenerkennung vorteilhaft genutzt werden kann.

Beispielweise kann vorgesehen sein, dass in mehr als einem freigehaltenen Ranging-Slot eine UWB-Radaroperation ausgeführt wird.

Alternativ kann vorgesehen sein, dass in jedem freigehaltenen Ranging-Slot eine UWB-Radaroperation ausgeführt wird.

Besonders bevorzugt ist eine Weiterbildung, gemäß welcher jeder der wenigstens zwei UWB-Mehrfunktionschips in jedem freigehaltenen Ranging-Slot eine UWB-Radaroperation ausführt. Eine derartige Vorgehensweise bewirkt, dass zum einen die zeitliche Auflösung der erhaltenen Radardaten maximiert ist und zum anderen Radardaten für den jeweiligen Radarerfassungsbereich von jedem UWB-Mehrfunktionschip des UWB-Netzwerks erhalten werden.

Besonders bevorzugt wird die Ablauffolge derart aufgebaut, dass jeder der freigehaltenen RangingSlots nicht mehr als 8 ms nach dem unmittelbar vorhergehenden freigehaltenen Ranging-Slot zeitlich beabstandet ist und/oder jeder der freigehaltenen Ranging-Slots nicht mehr als 8 ms vor dem unmittelbar nachfolgenden freigehaltenen Ranging-Slot beabstandet ist. Der Abstand ist damit als Abstand des jeweiligen Beginns des Blocks zu sehen; das bedeutet beispielsweise, dass ein Abstand von 8 ms zwischen zwei einander nächsten freigehaltenen Blocks der Abstand von dem Beginn des ersten freigehaltenen Blocks und dem Beginn des zweiten freigehaltenen Blocks ist, was beispielsweise bei einer Blocklänge von 2 ms gleichbedeutend ist damit, dass zwischen dem Ende des ersten Blocks bis zum Beginn des zweiten Blocks 6 ms liegen. Das Festlegen von freigehaltenen Ranging-Slots in Zeitabständen, die nicht mehr als 8 ms betragen, hat die vorteilhafte Wirkung zur Folge, dass die zeitliche Auflösung der erhaltenen Radardaten entsprechend erhöht wird, wodurch anspruchsvolle Bewegungserkennung, beispielsweise in der Anwendung einer Gestenerkennung, erst ermöglicht werden.

Als geeignete zeitliche Breite eines Ranging-Slots hat sich eine Slotbreite von 2 ms erwiesen, die damit eine bevorzugte Weiterbildung darstellt. Besonders bevorzugt ist, dass alle Ranging-Slots eines Ranging-Durchgangs die selbe zeitliche Breite aufweisen.

Das UWB-Netzwerk weist bevorzugt N UWB-Mehrfunktionschips auf, wobei N eine ganzzahlige Zahl > 1 ist.

In einer speziellen Weiterbildung des Verfahrens ist vorgesehen, dass das UWB-Netzwerk wenigstens N, bevorzugt genau N, UWB-Mehrfunktionschips aufweist. Dabei ist eine ganze Zahl > 1. Das Design des Ranging Blocks ist dabei gemäß Weiterbildung der Erfindung so konzipiert, dass in dem Ranging-Durchgang N + N`, bevorzugt genau N + N', für eine UWB-Kommunikation zur Verfügung stehende UWB-Ranging-Slots vorhanden sind. Das bedeutet, dass die Ranging Round besteht aus zum einen den Zeit-Slots für die Übermittlung von Daten, die beispielsweise als PrePoll, Poll, Final, und/oder Final-Data bezeichnet werden können, sowie zum anderen aus (N + N`) UWB-Ranging-Slots, in denen eine UWB-Kommunikation vorgesehen sein kann. Dabei ist jedem der N UWB-Mehrfunktionschips ein, bevorzugt genau ein, Ranging-Slot als UWB-Ranging-Slot exklusiv zugeordnet. Die Ranging-Slots, welche den N UWB-Mehrfunktionschips zugeordnet sind, geben vor, in welchem Zeitraum der Ranging Round welcher der UWB-Mehrfunktionschips eine UWB-Ranging-Kommunikation mit dem mobilen UWB-Gerät durchführt. Zusätzlich weist der Ranging-Durchgang außerdem N`=ceil(N/3) freigehaltene Ranging-Slots auf, die nicht einem UWB-Mehrfunktionschip zugeordnet sind, wobei zwischen jedem Paar zweier nächster freigehaltener Ranging-Slots drei UWB-Ranging-Slots, bevorzugt genau drei UWB-Ranging-Slots, angeordnet sind. "Geil" bezeichnet dabei die Aufrundungsfunktion, auch als obere Gaußklammer bekannt. Besonders bevorzugt ist die Breite jedes Ranging-Slots in der Ranging Round 2 ms; in einem solchen Fall führt die beschriebene Konzeption zu der vorteilhaften Ausführung, gemäß welcher in einem Ranging-Durchgang jeder der UWB-Mehrfunktionschips des UWB-Netzwerks eine, bevorzugt genau eine, UWB-Ranging-Kommunikation durchführt, und darüber hinaus außerdem freigehaltene Ranging-Slots vorgesehen sind, in denen in hoher zeitlicher Auflösung UWB-Radaroperationen möglich sind, ohne dass für diese eine Störung der UWB-Ranging-Kommunikation in Kauf genommen werden muss. Die UWB-Radaroperationen können dabei entweder zu jedem der freigehaltenen Ranging-Slots von einem selben der UWB-Mehrfunktionschips, oder zu jedem der freigehaltenen Ranging-Slots von einem oder mehreren beliebigen der UWB-Mehrfunktionschips, oder - bevorzugt - zu jedem der freigehaltenen Ranging-Slots von jedem der UWB-Mehrfunktionschips des UWB-Netzwerks durchgeführt werden.

Gemäß einer alternativen Weiterbildung der erfindungsgemäßen Verfahrensführung ist vorgesehen, dass der wenigstens eine der wenigstens zwei UWB-Mehrfunktionschips, der die UWB-Radaroperation ausführt, die UWB-Radaroperation in einem Ranging-Slot durchführt, der einem anderen als dem wenigstens einen der wenigstens zwei UWB-Mehrfunktionschips als UWB-Ranging-Slot zugeordnet ist. Dadurch wird sichergestellt, dass die Radaroperation während des Ranging-Durchlaufs stets von einem UWB-Mehrfunktionschip ausgeführt wird, der nicht zum selben Zeitpunkt für eine UWB-Ranging-Kommunikation vorgesehen ist; das bedeutet zudem wiederum, dass eine UWB-Radaroperation, durchgeführt von einem der UWB-Mehrfunktionschips, zeitlich parallel zu einer UWB-Ranging-Kommunikation, durchgeführt von einem anderen der UWB-Mehrfunktionschips, erfolgt.

Besonders bevorzugt ist vorgesehen, dass der wenigstens eine der wenigstens zwei UWB-Mehrfunktionschips, der die UWB-Radaroperation ausführt, bevorzugt jeder der wenigstens zwei UWB-Mehrfunktionschips, während des Ranging-Durchgangs wiederholt UWB-Radaroperationen ausführt. Dadurch ist sichergestellt, dass eine ausreichende zeitliche Auflösung von Radardaten zur Verfügung steht.

Die zeitliche Breite eines Ranging-Slots 2 ms ist bevorzugt.

In einer vorteilhaften Weiterbildung ist vorgesehen, dass zwischen zwei Radaroperationen maximal 8 ms zeitlicher Abstand und/oder maximal drei Ranging-Slots ohne Radaroperation liegen. Auch diese Maßnahme dient einer Bereitstellung von Radardaten mit ausreichender zeitlicher Auflösung.

Beispielsweise kann vorgesehen sein, dass das UWB-Netzwerk wenigstens N, bevorzugt genau N, UWB-Mehrfunktionschips aufweist, wobei der Ranging-Durchgang N für eine UWB-Kommunikation zur Verfügung stehende UWB-Ranging-Slots aufweist, wobei jedem der N UWB-Mehrfunktionschips ein, bevorzugt genau ein, Ranging-Slot als UWB-Ranging-Slot exklusiv zugeordnet ist, wobei der wenigstens eine der wenigstens zwei UWB-Mehrfunktionschips, der die UWB-Radaroperation ausführt, die UWB-Radaroperationen durchführt verteilt über Ranging-Slots, die nicht dem wenigstens einen der wenigstens zwei UWB-Mehrfunktionschips als UWB-Ranging-Slot exklusiv zugeordnet sind.

Besonders bevorzugt erfolgt der Aufbau der Ablauffolge dabei derart, dass die Ablauffolge 96 ms beträgt oder ein ganzzahliges Vielfaches der Ablauffolge 96 ms ergibt, und dass zusätzlich der Ranging Block 96 ms oder ein ganzzahliges Vielfaches von 96 ms ergibt. Bei gegebener Anzahl von UWB-Mehrfunktionschips im UWB-Netzwerk ist dies möglich unter der Maßgabe, dass die Slotdauer 1 ms oder 2 ms oder ein ganzzahliges Mehrfaches von 1 ms oder ein ganzzahliges Mehrfaches von 2 ms beträgt, und dass nach Zuordnung von genau einem Slot zu jedem UWB-Mehrfunktionschip im UWB-Netzwerk, die Ablauffolge aufgefüllt werden kann mit freigehaltenen Ranging-Slots und/oder mit Leerslots, für die keine Verwendung vorgesehen ist, und/oder mit Daten-Slots.

Ergänzend zu den oben beschriebenen Überlegungen kann vorgesehen sein, dass wenigstens einer der einem UWB-Mehrfunktionschip exklusiv zugeordneten UWB-Ranging-Slots als Mehroperationen-Slot ausgebildet ist. Dies wird dadurch erreicht, dass er innerhalb der Ablauffolge eine zeitliche Breite aufweist, die größer ist als die Zeitdauer, die für eine UWB-Ranging-Kommunikation erforderlich ist, das heißt: größer als eine zeitliche Breite von 0,5 ms oder 1 ms oder 2 ms. Beispielsweise kann eine zeitliche Breite der einem UWB-Mehrfunktionschip exklusiv zugeordneten UWB-Ranging-Slots 1 ms oder 2 ms oder 4 ms oder 6 ms oder 8 ms betragen. Wenigstens einer der wenigstens zwei UWB-Mehrfunktionschips kann in dem Mehroperationen-Slot, zeitlich getrennt von der in diesem Mehroperationen-Slot ausgeführten UWB-Ranging-Kommunikation, eine UWB-Radaroperation ausführen. Bevorzugt wird in einem solchen Fall die UWB-Radaroperation nach der UWB-Ranging-Kommunikation ausgeführt. Durch die Möglichkeit des Ausführens von mehreren Operationen im selben Slot wird die Erfassungsprozedur flexibilisiert.

Ein weiterer Gedanke der Erfindung betrifft eine Einrichtung, die Folgendes aufweist:
- Es ist ein UWB-Netzwerk vorhanden, wobei das UWB-Netzwerk eine Anzahl von wenigstens zwei voneinander beabstandeten UWB-Mehrfunktionschips aufweist. Beispielsweise kann es sich bei der Einrichtung um ein Fahrzeug handeln, das eine Anzahl von beispielsweise sechs bis acht, bevorzugt sieben, UWB-Mehrfunktionschips aufweist, die an verschiedenen Positionen des Fahrzeugs angeordnet sind.

Jeder der wenigstens zwei voneinander beabstandeten UWB-Mehrfunktionschips des UWB-Netzwerks weist sowohl eine UWB-Ranging-Funktionalität als auch eine UWB-Radar-Funktionalität auf. UWB-Mehrfunktionschips, die sowohl eine UWB-Ranging-Funktionalität als auch eine UWB-Radar-Funktionalität aufweisen, sind kommerziell verfügbar.
- An der Einrichtung ist eine Steuereinrichtung vorhanden, die mit jedem der UWB-Multifunktionschips gekoppelt ist. Beispielsweise kann es sich, wenn die Einrichtung ein Fahrzeug ist, bei der Steuereinrichtung um das zentrale Steuergerät handeln, mit dem jeder der UWB-Multifunktionschips gekoppelt ist, sodass die Steuereinrichtung zur koordinierten Steuerung der Gesamtheit der UWB-Multifunktionschips befähigt ist. Alternativ kann auch vorgesehen sein, dass einer der UWB-Multifunktionschips, der mit allen anderen der UWB-Multifunktionschips unmittelbar oder mittelbar gekoppelt ist, und der eine Steuervorrichtung wie beispielsweise einen Mikrocontroller aufweist, die Funktion der Steuereinrichtung übernimmt. Es ist auch denkbar, dass jeder UWB-Multifunktionschip eine eigene Steuervorrichtung wie beispielsweise einen Mikrocontroller aufweist, der in jeweiliger Kenntnis der Ablauffolge die Steuerung des jeweiligen UWB-Multifunktionschips vollständig oder teilweise durchführt. Die Koordination der Session, also insbesondere das Initiieren einer zeitlich gesteuerten Ablauffolge mit UWB-Ranging-Kommunikation und mit UWB-Radaroperation, erfolgt bevorzugt über ein Steuergerät im Fahrzeug, beispielsweise die zentrale Fahrzeugsteuerung. Alternativ kann auch einer der UWB-Mehrfunktionschips die Koordination durchführen. Nach der Koordination handelt jeder UWB-Mehrfunktionschip gemäß der vereinbarten Ablauffolge autark.

Die Steuereinrichtung ist insbesondere durch entsprechende Programmierung, eingerichtet, ein Verfahren nach einem der vorhergehenden Ansprüche durchzuführen. Die Steuereinrichtung verfügt dabei bevorzugt insbesondere über die Befähigung, eine Kommunikation mit einem UWB-Gerät, beispielsweise mit einem für UWB-Kommunikation vorbereiteten Smartphone, zu initiieren sowie die Verabredung eines Ranging Blocks zu koordinieren und diesen Ranging Block sodann an die beteiligten UWB-Multifunktionschips zu verteilen. Das UWB-Gerät wird dabei, wie in dem gesamten vorliegenden Text, nicht als Bestandteil des UWB-Netzwerks angesehen.

Um die Kommunikation mit einem UWB-Gerät zu bewerkstelligen, verfügt die Einrichtung bevorzugt über eine mit der Steuereinrichtung gekoppelte Kommunikationsschnittstelle zur Funkkommunikation mit dem mobilen UWB-Gerät. Die Kombinationsschnittstelle kann beispielsweise eine Bluetooth^{®}-Schnittstelle sein. Die Steuereinrichtung ist bevorzugt ausgebildet und eingerichtet, mit dem mobilen UWB-Gerät einen Ranging Block auszuhandeln oder dem mobilen UWB-Gerät einen Ranging Block vorzugeben.

Gemäß einer vorteilhaften Weiterbildung ist die Steuereinrichtung bevorzugt eingerichtet, den Ranging Block mit dem mobilen UWB-Gerät auszuhandeln mit einem oder mehreren Ranging-Durchgängen, wobei
- jeder Ranging-Durchgang eine Anzahl von Ranging-Slots aufweist, die der Anzahl N von UWB-Mehrfunktionschips in dem UWB-Netzwerk entspricht, oder wobei
- jeder Ranging-Durchgang eine Anzahl von Ranging-Slots aufweist, die der Anzahl N von UWB-Mehrfunktionschips in dem UWB-Netzwerk zuzüglich N'=ceil(N/3) freigehaltener Ranging-Slots entspricht.

Die Einrichtung ist insbesondere ein Fahrzeug, bevorzugt ein Automobil.

Weitere Einzelheiten, Merkmale und Vorteile des erfindungsgemäßen Verfahrens und seiner Weiterbildungen ergeben sich aus der nachfolgenden Beschreibung in Zusammenhang mit den Zeichnungen, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind. Es zeigen:
Fig. 1: Ein Ausführungsbeispiel einer Einrichtung in Ausbildung eines Automobils;
Fig. 2: schematische Darstellung einer Ablauffolge als Ranging Block zur Erläuterung einer ersten Ausführungsform eines Verfahrens;
Fig. 3: schematische Darstellung einer Ablauffolge als Ranging Block zur Erläuterung einer zweiten, alternativen Ausführungsform eines Verfahrens.

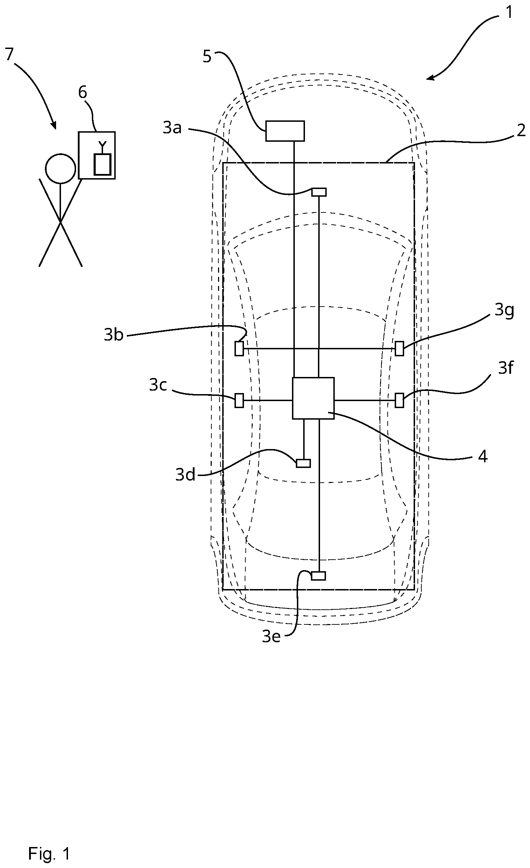

In Fig. 1 ist ein Ausführungsbeispiel einer Einrichtung 1 in Ausführung eines Kraftfahrzeugs dargestellt.

Das Kraftfahrzeug 1 weist ein UWB-Netzwerk 2 auf. Das UWB-Netzwerk 2 besteht aus einer Anzahl von im dargestellten Beispiel sieben UWB-Mehrfunktionschips 3a, 3b, 3c, 3d, 3e, 3f, 3g. Die sieben UWB-Mehrfunktionschips sind voneinander beabstandet am Fahrzeug angeordnet. Jeder der sieben UWB-Mehrfunktionschips 3a, 3b, 3c, 3d, 3e, 3f, 3g weist sowohl eine UWB-Ranging-Funktionalität als auch eine UWB-Radar-Funktionalität auf. Der Chip ist eine hierfür bereitgestellte, beispielsweise auch kommerziell verfügbare, Einheit, die alle für die genannten Vorgänge benötigten Elemente aufweist, insbesondere auch eine entsprechende UWB-Sendeempfangseinrichtung, eine UWB-Antenne und für UWB-Ranging und für UWB-Radarfunktionalität jeweils erforderliche Ansteuerungselemente, beispielsweise als entsprechend programmierter Mikrocontroller ausgeführt.

An dem Fahrzeug ist ferner eine als zentrale Fahrzeugsteuerung ausgebildete Steuereinrichtung 4 angeordnet, mit der jeder der UWB-Mehrfunktionschips gekoppelt ist, der selbst dabei nicht als Bestandteil des UWB-Netzwerks angesehen wird. Die Steuereinrichtung 4 ist mit einer am Fahrzeug 1 angeordneten Kommunikationsschnittstelle 5 gekoppelt, die beispielsweise als Bluetooth^{®}-Schnittstelle ausgebildet ist, und die mit einem mobilen UWB-Gerät 6, das ein Bediener 7 mit sich führt, kommunizieren kann. Das mobile UWB-Gerät 6 ist beispielsweise als Smartphone ausgebildet, das unter anderem über eine Bluetooth^{®}-Schnittstelle und über eine UWB-Schnittstelle verfügt, wie es am Prioritätstag in der Praxis nicht unüblich ist. Die Steuereinrichtung 4 ist ausgebildet und eingerichtet, mit dem mobilen UWB-Gerät 6 über die Bluetooth^{®}-Schnittstelle zu kommunizieren und dabei einen Ranging Block auszuhandeln, wobei diese Aushandlung auch über alternative Wege erfolgen kann, beispielsweise über eine UWB-Kommunikation.

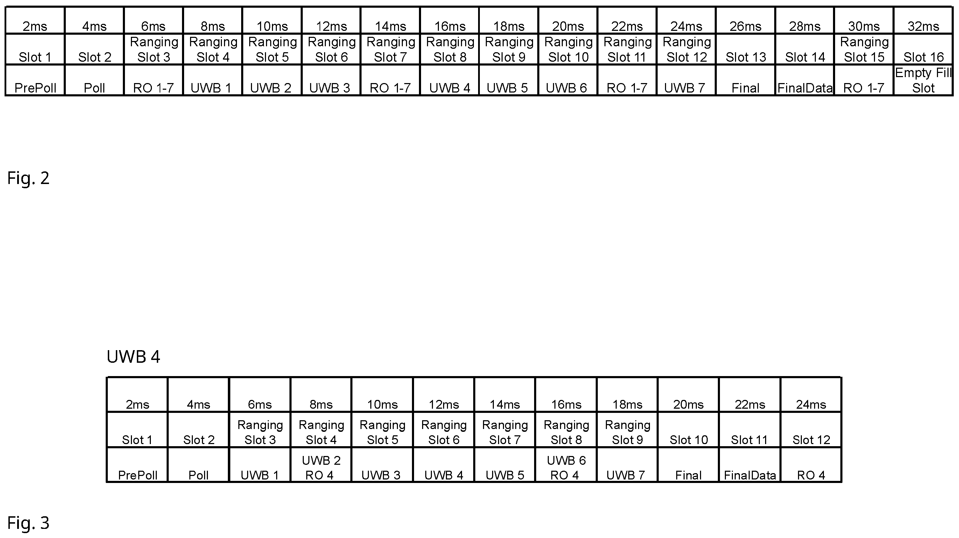

Mit Fig. 2 ist ein Verfahren illustriert, mit dem ein UWB-Netzwerk mit einer Anzahl von wenigstens zwei voneinander beabstandeten UWB-Mehrfunktionschips betrieben werden kann. Im Beispiel der Fig. 2 sind sieben UWB-Mehrfunktionschips vorhanden, die alle jeweils eine UWB-Ranging-Funktionalität als auch eine UWB-Radar-Funktionalität aufweisen. Fig. 2 kann also als Darstellung eines Verfahrens zum Betreiben eines UWB-Netzwerks angesehen werden, wie es in Fig. 1 dargestellt ist.

Die UWB-Ranging-Funktionalität wird sequentiell abwechselnd von den UWB-Mehrfunktionschips ausgeführt. Die Ausführung ist in einer Ablauffolge festgelegt, die zwischen den UWB-Mehrfunktionschips und einem für UWB-Kommunikation eingerichteten UWB-Gerät, beispielsweise Smartphone, eines Bedieners, synchronisiert ist, d. h. allen der genannten beteiligten Geräte bekannt ist. Die Ablauffolge ist in Ranging-Slots und Daten-Slots, unterteilt. In der gezeigten Ablauffolge der Fig. 2 sind die Daten-Slots Slot 1, Slot 2, Slot 13, Slot 14 und Slot 16 vorhanden.

Ferner gibt es sieben Ranging-Slots, nämlich Ranging-Slots 4, 5, 6, 8, 9, 10 und 12, die jeweils einem der sieben UWB-Mehrfunktionschips zugeordnet sind, sodass jedem der sieben UWB-Mehrfunktionschips genau ein Ranging-Slot eineindeutig und exklusiv als UWB-Ranging-Slot zugeordnet ist. Die Zuordnung ist in Fig. 2 in der Nomenklatur dargestellt, die beispielsweise für den ersten UWB-Mehrfunktionschip "UWB 1" in der Zuordnung zu "Ranging Slot 4" lautet, für den zweiten UWB-Mehrfunktionschip "UWB 2" in der Zuordnung zu "Ranging Slot 5" lautet, usw. Jeder der sieben UWB-Mehrfunktionschips des UWB-Netzwerks führt innerhalb des ihm jeweils exklusiv zugeordneten UWB-Ranging-Slots eine vollständige UWB-Ranging-Kommunikation aus, also ein Senden eines UWB-Signals und ein Erwarten der UWB-Signal-Erwiderung vom UWB-Gerät des Bedieners, gegebenenfalls deren Erwarten.

Der Ranging-Durchgang weist zusätzlich zu den allen sieben UWB-Mehrfunktionschips jeweils exklusiv zugeordneten UWB-Ranging-Slots vier freigehaltene Ranging-Slots auf, die nicht einem UWB-Mehrfunktionschip als UWB-Ranging-Slot zugeordnet sind. Es handelt sich bei diesen um die Ranging-Slots 3, 7, 11 und 15. Die Ablauffolge der Fig. 2 weist also vier Ranging-Slots auf, die nicht einem UWB-Mehrfunktionschip als UWB-Ranging-Slot zugeordnet sind. In dem in Fig. 2 dargestellten Beispiel wird jeder dieser vier Slots dazu genutzt, dass jeder der sieben UWB-Mehrfunktionschips in jedem freigehaltenen Ranging-Slot eine UWB-Radaroperation ausführt. Dies ist dadurch dargestellt, dass in jedem der Slots 3, 7, 11 und 15 Radaroperationen aller sieben UWB-Mehrfunktionschips, RO 1-7, ausgeführt werden. Selbstverständlich wäre alternativ möglich, dass nur einer der UWB-Mehrfunktionschips in allen vier Slots eine Radaroperation durchführt, oder eine Untermenge der UWB-Mehrfunktionschips in allen vier Slots eine Radaroperation durchführt, oder jeder der sieben UWB-Mehrfunktionschips einer eigenen Auswahl der freien Slots zugeordnet wird.

Im vorliegenden Beispiel beträgt die zeitliche Breite eines Ranging-Slots 2 ms. Aus der Anzahl der Slots ergibt sich, dass die Ablauffolge 32 ms lang ist. Die beschriebene Zuordnung der freibleibenden Ranging-Slots, die sodann für Radaroperationen genutzt werden können, bewirkt in vorteilhafter Weise, dass jeder der freigehaltenen Ranging-Slots nicht mehr als 8 ms nach dem unmittelbar vorhergehenden freigehaltenen Ranging-Slot zeitlich beabstandet ist und jeder der freigehaltenen Ranging-Slots nicht mehr als 8 ms vor dem unmittelbar nachfolgenden freigehaltenen Ranging-Slot beabstandet ist. Dadurch folgen zwei Radaroperationen mit 8 ms aufeinander, jeweils bemessen von Beginn zu Beginn eines Slots, wodurch auch anspruchsvolle Erkennungsaufgaben möglich werden, beispielsweise eine Erkennung auch von schnell ausgeführten Steuergesten, für die eine zeitliche Auflösung von mehr als 8 ms erfahrungsgemäß nicht mehr ausreichend ist.

In einem Ranging Block wird ein Ranging-Durchgang, Ranging Round, einmal oder mehrfach absolviert wird.

Die gezeigte Ablauffolge erfüllt nach dreimaliger Wiederholung mit einer Dauer von 96 ms eine Anforderung an die Länge an einen Ranging Block; die Ablauffolge selbst ist ein Ranging-Durchgang, auch als Ranging Round bezeichnet.

Eine alternative Möglichkeit, UWB-Ranging-Kommunikation mit einem UWB-Gerät und UWB-Radaroperation in einem UWB-Netzwerk, beispielsweise einem UWB-Netzwerk der Fig. 1, zu koordinieren, ist in Fig. 3 dargestellt. Die Belegung der Radarslots ist aus Platzgründen nur aus Sicht eines der UWB-Mehrfunktionschips gezeigt, im vorliegenden Fall des UWB-Mehrfunktionschips "UWB 4".

Es ist gezeigt, dass UWB-Mehrfunktionschip UWB 4 mehrere Radaroperationen durchführt; und zwar allesamt auf die Ranging-Slots verteilt, die jeweils entweder keinem, oder einem anderen als UWB 4 als UWB-Ranging-Slot zugeordnet sind, nämlich über Slots 4, 8 und 12 verteilt. Dadurch kann bei der zeitlichen Breite eines Ranging-Slots von 2 ms erreicht werden, dass eine hohe zeitliche Auflösung von Radardaten erhalten wird.

## Patentansprüche

1. Verfahren zum Betreiben eines UWB-Netzwerks (2),
wobei das UWB-Netzwerk (2) eine Anzahl von wenigstens zwei voneinander beabstandeten UWB-Mehrfunktionschips (3a, 3b, 3c, 3d, 3e, 3f, 3g) aufweist,
wobei wenigstens einer, bevorzugt jeder, der wenigstens zwei voneinander beabstandeten UWB-Mehrfunktionschips (3a, 3b, 3c, 3d, 3e, 3f, 3g) sowohl eine UWB-Ranging-Funktionalität als auch eine UWB-Radar-Funktionalität aufweist,
wobei das Betreiben des UWB-Netzwerks (2) sowohl jeweils eine bidirektionale UWB-Ranging-Kommunikation eines jeden der wenigstens zwei voneinander beabstandeten UWB-Mehrfunktionschips mit einem UWB-Gerät (6) als auch eine UWB-Radaroperation umfasst,
wobei sowohl die UWB-Ranging-Kommunikationen der wenigstens zwei voneinander beabstandeten UWB-Mehrfunktionschips (3a, 3b, 3c, 3d, 3e, 3f, 3g) mit dem UWB-Gerät (6) als auch die UWB-Radaroperation in einer Ablauffolge zeitlich gesteuert werden, die zwischen dem UWB-Netzwerk (2) und dem UWB-Gerät (6) synchronisiert ist,
und die bevorzugt als Ranging Block organisiert ist, wobei bevorzugt in einem Ranging Block ein Ranging-Durchgang, Ranging Round, einmal oder mehrfach absolviert wird,
wobei der Ranging-Durchgang in eine Anzahl von Slots, Ranging-Slots und Daten-Slots, unterteilt ist,
wobei jedem der wenigstens zwei UWB-Mehrfunktionschips (3a, 3b, 3c, 3d, 3e, 3f, 3g) jeweils wenigstens ein Ranging-Slot als UWB-Ranging-Slot exklusiv zugeordnet ist,
wobei jeder der wenigstens zwei UWB-Mehrfunktionschips (3a, 3b, 3c, 3d, 3e, 3f, 3g) innerhalb des wenigstens einen ihm jeweils exklusiv zugeordneten UWB-Ranging-Slots eine vollständige UWB-Ranging-Kommunikation ausführt, und
wobei wenigstens einer der wenigstens zwei UWB-Mehrfunktionschips (3a, 3b, 3c, 3d, 3e, 3f, 3g) in einem ihm nicht als UWB-Ranging-Slot zugeordneten Ranging-Slot eine UWB-Radaroperation ausführt.

2. Verfahren nach Anspruch 1, wobei jedem der wenigstens zwei UWB-Mehrfunktionschips (3a, 3b, 3c, 3d, 3e, 3f, 3g) genau ein Ranging-Slot als UWB-Ranging-Slot exklusiv zugeordnet ist.

3. Verfahren nach Anspruch 1 oder nach Anspruch 2, wobei der Ranging-Durchgang zusätzlich zu den jedem der wenigstens zwei UWB-Mehrfunktionschips (3a, 3b, 3c, 3d, 3e, 3f, 3g) exklusiv zugeordneten UWB-Ranging-Slots wenigstens einen freigehaltenen Ranging-Slot aufweist, der nicht einem UWB-Mehrfunktionschip als UWB-Ranging-Slot zugeordnet ist.

4. Verfahren nach Anspruch 3, wobei der Ranging-Durchgang wenigstens zwei freigehaltene Ranging-Slots aufweist, die nicht einem UWB-Mehrfunktionschip (3a, 3b, 3c, 3d, 3e, 3f, 3g) als UWB-Ranging-Slot zugeordnet sind.

5. Verfahren nach Anspruch 3 oder nach Anspruch 4, wobei der wenigstens eine der wenigstens zwei UWB-Mehrfunktionschips (3a, 3b, 3c, 3d, 3e, 3f, 3g), der die UWB-Radaroperation ausführt, die UWB-Radaroperation in wenigstens einem freigehaltenen Ranging-Slot, bevorzugt wiederholt in jedem freigehaltenen Ranging-Slot, ausführt.

6. Verfahren nach Anspruch 5, wobei
in mehr als einem freigehaltenen Ranging-Slot eine UWB-Radaroperation ausgeführt wird, oder
in jedem freigehaltenen Ranging-Slot eine UWB-Radaroperation ausgeführt wird, oder
jeder der wenigstens zwei UWB-Mehrfunktionschips in jedem freigehaltenen Ranging-Slot eine UWB-Radaroperation ausführt.

7. Verfahren nach einem der Ansprüche 3 bis 6, wobei jeder der freigehaltenen Ranging-Slots nicht mehr als 8 ms nach dem unmittelbar vorhergehenden freigehaltenen Ranging-Slot zeitlich beabstandet ist und/oder jeder der freigehaltenen Ranging-Slots nicht mehr als 8 ms vor dem unmittelbar nachfolgenden freigehaltenen Ranging-Slot beabstandet ist.

8. Verfahren nach einem der Ansprüche 3 bis 7, wobei die zeitliche Breite jedes Slots 1 ms oder 2 ms ist.

9. Verfahren nach einem der Ansprüche 3 bis 8, wobei das UWB-Netzwerk N UWB-Mehrfunktionschips (3a, 3b, 3c, 3d, 3e, 3f, 3g) aufweist.

10. Verfahren nach Anspruch 9, wobei das UWB-Netzwerk (2) wenigstens N, bevorzugt genau N, UWB-Mehrfunktionschips (3a, 3b, 3c, 3d, 3e, 3f, 3g) aufweist, wobei der Ranging-Durchgang N für eine UWB-Kommunikation zur Verfügung stehende UWB-Ranging-Slots aufweist, wobei jedem der N UWB-Mehrfunktionschips (3a, 3b, 3c, 3d, 3e, 3f, 3g) ein, bevorzugt genau ein, Ranging-Slot als UWB-Ranging-Slot exklusiv zugeordnet ist, wobei der Ranging-Durchgang außerdem N`=ceil(N/3) freigehaltene Ranging-Slots aufweist, die nicht einem UWB-Mehrfunktionschip (3a, 3b, 3c, 3d, 3e, 3f, 3g) zugeordnet sind, wobei zwischen jedem Paar zweier nächster freigehaltener Ranging-Slots drei UWB-Ranging-Slots angeordnet sind.

11. Verfahren nach Anspruch 1 oder nach Anspruch 2, wobei der wenigstens eine der wenigstens zwei UWB-Mehrfunktionschips (3a, 3b, 3c, 3d, 3e, 3f, 3g), der die UWB-Radaroperation ausführt, die UWB-Radaroperation in einem Ranging-Slot durchführt, der einem anderen als dem wenigstens einen der wenigstens zwei UWB-Mehrfunktionschips (3a, 3b, 3c, 3d, 3e, 3f, 3g) als UWB-Ranging-Slot zugeordnet ist.

12. Verfahren nach Anspruch 11, wobei der wenigstens eine der wenigstens zwei UWB-Mehrfunktionschips (3a, 3b, 3c, 3d, 3e, 3f, 3g), der die UWB-Radaroperation ausführt, bevorzugt jeder der wenigstens zwei UWB-Mehrfunktionschips (3a, 3b, 3c, 3d, 3e, 3f, 3g), während des Ranging-Durchgangs wiederholt UWB-Radaroperationen ausführt.

13. Verfahren nach einem der Ansprüche 11 bis 12, wobei die zeitliche Breite jedes Slots 1 ms oder 2 ms ist.

14. Verfahren nach einem der Ansprüche 11 bis 13, wobei zwischen zwei Radaroperationen maximal 8 ms zeitlicher Abstand und/oder maximal drei Ranging-Slots ohne Radaroperation liegen.

15. Verfahren nach einem der Ansprüche 11 bis 14, wobei das UWB-Netzwerk (2) wenigstens N, bevorzugt genau N, UWB-Mehrfunktionschips (3a, 3b, 3c, 3d, 3e, 3f, 3g) aufweist, wobei der Ranging-Durchgang N für eine UWB-Kommunikation zur Verfügung stehende UWB-Ranging-Slots aufweist, wobei jedem der N UWB-Mehrfunktionschips (3a, 3b, 3c, 3d, 3e, 3f, 3g) ein, bevorzugt genau ein, Ranging-Slot als UWB-Ranging-Slot exklusiv zugeordnet ist, wobei der wenigstens eine der wenigstens zwei UWB-Mehrfunktionschips (3a, 3b, 3c, 3d, 3e, 3f, 3g), der die UWB-Radaroperation ausführt, die UWB-Radaroperationen durchführt verteilt über Slots, die nicht dem wenigstens einen der wenigstens zwei UWB-Mehrfunktionschips (3a, 3b, 3c, 3d, 3e, 3f, 3g) als UWB-Ranging-Slot exklusiv zugeordnet sind.

16. Einrichtung (1), aufweisend
- ein UWB-Netzwerk (2), wobei das UWB-Netzwerk (2) eine Anzahl von wenigstens zwei voneinander beabstandeten UWB-Mehrfunktionschips (3a, 3b, 3c, 3d, 3e, 3f, 3g) aufweist,
wobei jeder der wenigstens zwei voneinander beabstandeten UWB-Mehrfunktionschips (3a, 3b, 3c, 3d, 3e, 3f, 3g) sowohl eine UWB-Ranging-Funktionalität als auch eine UWB-Radar-Funktionalität aufweist,
- eine Steuereinrichtung (4), die mit jedem der UWB-Multifunktionschips (3a, 3b, 3c, 3d, 3e, 3f, 3g) gekoppelt ist,
wobei die Steuereinrichtung (4) eingerichtet ist, ein Verfahren nach einem der vorhergehenden Ansprüche durchzuführen.

17. Einrichtung (1) nach Anspruch 16, aufweisend eine mit der Steuereinrichtung (4) gekoppelte Kommunikationsschnittstelle (5) zur Funkkommunikation mit einem mobilen UWB-Gerät (6), wobei
die Steuereinrichtung (4) ausgebildet und eingerichtet ist, mit dem mobilen UWB-Gerät (6) einen Ranging Block auszuhandeln.

18. Einrichtung (1) nach Anspruch 17, wobei die Steuereinrichtung (4) eingerichtet ist, den Ranging Block mit dem mobilen UWB-Gerät (6) auszuhandeln mit einem oder mehreren Ranging-Durchgängen, wobei
- jeder Ranging-Durchgang zumindest oder genau eine Anzahl von Ranging-Slots aufweist, die der Anzahl N von UWB-Mehrfunktionschips (3a, 3b, 3c, 3d, 3e, 3f, 3g) in dem UWB-Netzwerk (2) entspricht, oder wobei
- jeder Ranging-Durchgang zumindest oder genau eine Anzahl von Ranging-Slots aufweist, die der Anzahl N von UWB-Mehrfunktionschips (3a, 3b, 3c, 3d, 3e, 3f, 3g) in dem UWB-Netzwerk zuzüglich N'=ceil(N/3) freigehaltener Ranging-Slots entspricht.

19. Einrichtung (1) nach einem der Ansprüche 16 bis 18, wobei die Einrichtung (1) ein Fahrzeug ist, bevorzugt ein Automobil.
